(19) Europäisches Patentamt / European Patent Office / Office européen des brevets

(11) **EP 1 848 781 B1**

(12) # EUROPÄISCHE PATENTSCHRIFT

(45) Veröffentlichungstag und Bekanntmachung des Hinweises auf die Patenterteilung:
**02.04.2014 Patentblatt 2014/14**

(21) Anmeldenummer: **06706789.2**

(22) Anmeldetag: **09.02.2006**

(51) Int Cl.:
***C04B 30/00*** *(2006.01)* ***C09K 3/00*** *(2006.01)*
***C04B 14/06*** *(2006.01)* ***C01B 33/18*** *(2006.01)*
***C09C 3/00*** *(2006.01)* ***C09C 1/30*** *(2006.01)*
***C04B 111/28*** *(2006.01)* ***B82Y 30/00*** *(2011.01)*

(86) Internationale Anmeldenummer:
**PCT/EP2006/001154**

(87) Internationale Veröffentlichungsnummer:
**WO 2006/087136 (24.08.2006 Gazette 2006/34)**

(54) **PARTIKEL MIT GERINGER SPEZIFISCHER OBERFLÄCHE UND HOHER VERDICKUNGSWIRKUNG**

PARTICLES HAVING A SMALL SPECIFIC SURFACE AND A GREAT THICKENING EFFECT

PARTICULES COMPRENANT UNE SURFACE PEU SPECIFIQUE ET UNE ACTION D'EPAISSISSEMENT ELEVEE

(84) Benannte Vertragsstaaten:
**BE DE FR GB**

(30) Priorität: **18.02.2005 DE 102005007753**

(43) Veröffentlichungstag der Anmeldung:
**31.10.2007 Patentblatt 2007/44**

(73) Patentinhaber: **Wacker Chemie AG**
**81737 München (DE)**

(72) Erfinder:
- **BARTHEL, Herbert**
  **84547 Emmerting (DE)**
- **MAGINOT, Helmut**
  **84508 Burgkirchen (DE)**

(74) Vertreter: **Fritz, Helmut et al**
**Wacker Chemie AG**
**Intellectual Property**
**Hanns-Seidel-Platz 4**
**81737 München (DE)**

(56) Entgegenhaltungen:
**EP-A- 0 097 378 EP-A- 1 302 444**

- **H. BARTHEL, L. RÖSCH, J. WEIS IN: "Organosilicon Chemistry II, From Molecules to Materials," 1996, WILEY VCH , WEINHEIM , XP002428170 Seite 772, Zeile 7 - Zeile 31 Seite 761 - Seite 778**
- **J. MATHIAS, G. WANNEMACHER: "Basic Characteristics and Applications of Aerosil : 30. The Chemistry and Physics of the Aerosil Surface" J. COLLOID AND INTERFACE SCI., Bd. 125, Nr. 1, 1988, Seiten 61-68, XP002428168**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 848 781 B1

## Beschreibung

Die Erfindung betrifft die Herstellung von Kieselsäure-Partikeln.

Die Herstellung von Metalloxiden, Siliciumdioxiden und Kieselsäuren in nasschemischen Fällungsprozessen und Hochtemperaturreaktionen ist bekannt.

Das Dokument "Fumed Silica - Production, Properties and Applications" (H. Barthel, L. Rösch, J. Weis, in Organosilicon Chemistry II, From Molecules to Materials, 1996, Wiley, VCH, Weinheim) gibt einen Überblick über die für pyrogene Kieselsäuren charakteristische Herstellung, Eigenschaften und Anwendungen.

Dabei geht das Dokument nicht darauf ein, wie der Herstellprozess modifiziert werden muss, um eine Kieselsäure mit höherer Verdickungswirkung und definierter Porosität zu erhalten.

Auch das Dokument "Basic Characteristics and Applications of Aerosil: 30, The Chemistry and Physics of the Aerosil Surface" (J. Mathias, G. Wannemacher, J. Colloid and Interface Sci. 125 (1), 1988, S. 61-68) beschreibt die für pyrogene Kieselsäuren charakteristischen Eigenschaften und Anwendungen. Es stellt die prinzipielle Abhängigkeit der Verdickungseigenschaften von pyrogenen Kieselsäuren von ihren Oberflächeneigenschaften, z.B. spezifische Oberfläche, Silanolgruppendichte auf der Oberfläche, Hydrophobierungsgrad oder die Reaktivität der Silanolgruppen, dar. Dabei geht aus der Schrift nicht hervor, wie die Pyrolyseflamme beschaffen sein muss, um eine hydrophile pyrogene Kieselsäure mit höherer Verdickungswirkung und definierter Porosität herzustellen.

EP 0 097 378 beschäftigt sich mit der Herstellung von pyrogenen Kieselsäuren mit verstärkter Verdickungswirkung. Zu diesem Zweck wird der Pyrolyseflamme zusätzliche Energie vorzugsweise mit Hilfe von Zusatzbrennern zugeführt, was einen höheren Einsatz des Brenngases (Wasserstoffgas) bedeutet.

EP 1 302 444 beschreibt ein Verfahren zur Herstellung von Kieselsäuren mit geringem Gehalt an Kieselsäure-Silanolgruppen, wobei aufgrund übereinstimmender physikalischer Parameter anzunehmen ist, dass die Kieselsäuren eine starke Verdickungswirkung haben. Das Patent setzt zur Herstellung der Ausgangskieselsäure 74,3 $Nm^3/h$ Luft und 10,8 kg/h Siliziumtetrachlorid ein. Somit liegt das eingesetzte Luftvolumen bei 688 $Nm^3/h$ auf 100 kg/h Silan. Zudem gibt das Patent ein bestimmtes Verhältnis an zugesetztem Wasserstoffgas zu Luft an. Dieses beträgt 0,28. Die Publikation führt aber nicht aus, dass die Wahl des Volumens an eingesetztem Brenngas kritisch ist, um eine verstärkte Verdickungswirkung zu erreichen und wie die Verdickungswirkung beeinflusst werden kann.

Nachteil bekannter Verfahren zur Herstellung pyrogener Kieselsäuren ist die Korrelation zwischen der spezifischen Oberfläche der Kieselsäure und der relativen Viskosität oder Verdickungswirkung $\eta_{rel}$ in flüssigen Medien.

$$\eta_{rel} = \eta/\eta_0$$

Hierbei ist $\eta$ die Viskosität bei 25°C der Flüssigkeit, des Flüssigkeitsgemisches oder anderer beliebiger flüssiger Mischungen, die "Kieselsäure in feinverteilter und dispergierter Form enthalten und $\eta_0$ die Viskosität bei 25°C der Flüssigkeit, des Flüssigkeitsgemisches oder anderer beliebiger flüssiger Mischungen, die diese Kieselsäure nicht enthalten.

Die Korrelation zwischen relativer Viskosität oder Verdickungswirkung $\eta_{rel}$ und spezifischer Oberfläche schränkt den Einsatzbereich von nicht Oberflächen-modifizierten und Oberflächen-modifizierten Kieselsäuren stark ein. Um neue Anwendungsfelder für Kieselsäure zu erschließen, ist es eine Aufgabe, den Stand der Technik zu verbessern und insbesondere pyrogene Kieselsäure zu entwickeln, die höhere Verdickungswirkung aufweist.

Diese Aufgabe wird von der Erfindung gelöst.

Gegenstand der Erfindung ist ein Verfahren zur Herstellung von hydrophiler, pyrogener Kieselsäure mit einer relativen Viskosität oder Verdickungswirkung $\eta_{rel}$ grösser 2, gemessen in einem flüssigen Medium mit einer Viskosität von 1 Pas bei einer Temperatur von 25 °C und gemessen bei einem Schergefälle von 10 $s^{-1}$ und die in trockener Form in der Lage sind Haufwerke zu bilden, mit einer Porosität von größer 0,5, durch die Umsetzung von einem verdampfbaren Tetrachlorsilan und

Hydrogentrichlorsilangemisch, in einer Wasserstoff-Sauerstoff-Flamme bei Temperaturen von größer als 1000 °C und bis maximal 2000°C, mit der Maßgabe, dass die Herstellung der pyrogenen Kieselsäure unter wasserfreien Bedingungen erfolgt, wobei nach der Umsetzung die Kieselsäure von Prozessgas getrennt wird, und anschließend von restlichem Chlorwasserstoffgas gereinigt wird, indem in einem heißen Gasstrom bei Temperaturen von vorzugsweise größer 250 °C - 600 °C gereinigt wird und wobei das Verhältnis des eingesetzten Volumens an Wasserstoffgas bezogen auf das eingesetzte Volumen an Luft kleiner oder gleich 0,26 ist und wobei 100 kg/h Silane mehr als 800 $Nm^3/h$ Luft zugesetzt werden.

In einer bevorzugten Ausführung wird die spezifische Oberfläche O-spez als BET-Oberfläche mittels Stickstoff O-BET-$N_2$ bei der Siede-Temperatur des flüssigen Stickstoffs gemessen, bevorzugt gemäß Deutscher Industrie Norm DIN 66131 und DIN 66132.

In einer anderen bevorzugten Ausführung wird die spezifische Oberfläche O-spez über die spezifische Wasser-Oberfläche O-BET-$H_2O$, die wiederum aus der Monolagenkapazität N-$H_2O$ der pyrogenen Kieselsäure, für Wasser berechnet wird, multipliziert mit einem Faktor K, bestimmt. Für pyrogene Kieselsäure kann dieser Faktor empirisch durch Vergleich der mittels Stickstoff bestimmten BET-Oberfläche O-BET-$N_2$ und spezifische Wasser-Oberfläche O-BET-$H_2O$ erhalten werden als K ist gleich die Stickstoff BET-Oberfläche O-BET-$N_2$ dividiert durch spezifische Wasser-Oberfläche O-BET-$H_2O$. Bevorzugt ist dieser Faktor K größer als 2 und kleiner als 4, besonders bevorzugt 3.

$$\text{O-spez} = \text{O-BET-}H_2O * 3$$

Und

$$\text{O-BET-}H_2O = \text{N-}H_2O * \text{a-}H_2O$$

wobei a-$H_2O$ die Molekülfläche von Wasser ist: a-$H_2O$ = 11. 9 $Å^2$ (1 Å = 0,1 nm = $10^{-10}$ m)

Bevorzugt wird die spezifische Wasseraufnahme mittels Inverser Gas Chromatography (IGC) als IGC bei endlicher Konzentration (IGC-FC) aus Wasser Desorptions-Isothermen bei einer Temperatur bevorzugt von großer als 20°C und kleiner als 60°C, bevorzugt bei einer Temperatur von 40°C, besonders bevorzugt bei einer Temperatur von 30°C bestimmt.

Die Adsorptionsisotherme kann aus einem einzigen Gaschromatografie-Peak berechnet werden [J.R. Conder, C.L. Young, Physico-Chemical Measurement by Gas Chromatography. Wiley, New York, 1979], wie in Figur 1 beschrieben, zum Beispiel für Relativdampfdrücke P/P0 von nahe 0 bis 0.3.

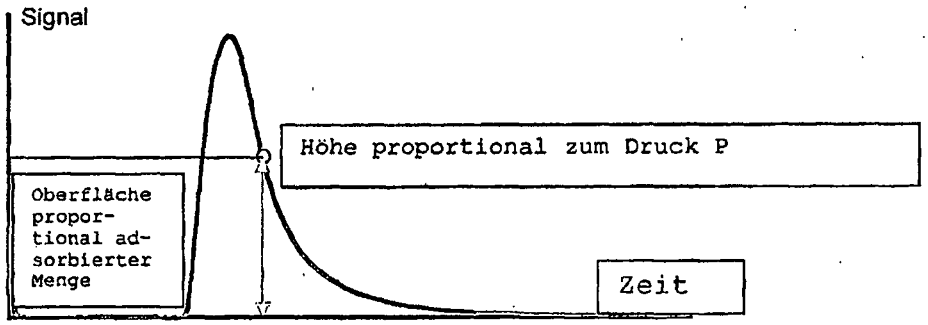


Abbildung 1. Prinzip der Bestimmung eines Punktes der Adsorptionsisotherme bei relativen Dampfdrücken p/p0 im Bereich 0,01 < p/p0 < 0,3.

Aus der Isotherme wird folgende Information erhalten:

Die spezifische Oberfläche der Proben: Der Teil der Isotherme zwischen Relativdampfdrücken von 0,05 < p/p0 < 0,3 gestattet die Berechnung der spezifischen Oberfläche nach BET O-BET-$H_2O$ und der BET-Konstanten C-BET-$H_2O$, die ein Maß für die Adsorptionsenergie von Wassser auf pyrogener Kieselsäure darstellt.

Die IGC-FC liefert direkt die erste Ableitung der Isotherme durch Anwendung folgender Beziehung:

$$\left(\frac{\partial N}{\partial P}\right)_{L,R} = \frac{1}{RT}\frac{D_c}{m}(t_R - t_0)$$

wobei gilt:

L ist die Länge der GC-Säule, N ist die Zahl der Moleküle an einem gegebenen Punkt des GC Peaks, P ist der Adsorptionsdruck, $t_R$ ist die Retentionszeit der eingespritzten Probe, $t_0$ ist die Retentionszeit einer (fast) nicht adsorbierenden Probe wie zum Beispiel Luft, was erlaubt, die Totzeit $t_t$ der GC-Säule zu bestimmen. $D_c$ ist der korrigierte

Gasfluss und m die Masse des Feststoffs in der Säule.

Peaks, die aus dem Einspritzen von Wasser erhalten werden, können ausgewertet werden unter Anwendung der ECP Prozedur (Elution at the Characteristic Point) [J.R. Conder, C.L. Young, Physico-Chemical Measurement by Gas Chromatography. Wiley, New York, 1979] zur Berechnung der Isotherme.

Die Isotherme wird ausgewertet in einem Bereich des Relativdampfdruck von

$$0,01 < P/P0 < 0,25$$

Dieser Bereich der Isotherme wird nach dem BET Algorithmus ausgewertet [S.J. Gregg, K.S.W. Sing, Adsorption, Surface Area and Porosity, second edition, Academic Press, London, 1982], erhalten wird die spezische BET Wasseroberfläche O-BET-$H_2O$, unter der Annahme der Molekülfläche von Wasser von 11,9 Å$^2$ (1 Å = 0,1 nm = $10^{-10}$ m).

Die relative Viskosität oder Verdickungswirkung der Kieselsäure wird wie folgt bestimmt. Die relative Viskosität oder Verdickungswirkung der Kieselsäure, ergibt sich als Quotient der Viskosität $\eta$ und der Leer-Viskosität $\eta_0$.

$$\eta_{rel} = \eta/\eta_0$$

Hierbei ist $\eta$ die Viskosität bei 25°C der Flüssigkeit, des Flüssigkeitsgemisches oder anderer beliebiger flüssiger Mischungen, die Kieselsäure in feinverteilter und dispergierter Form enthalten, und $\eta_0$ die Leer-Viskosität bei 25°C der Flüssigkeit, des Flüssigkeitsgemisches oder anderer beliebiger flüssiger Mischungen die diese Kieselsäure nicht enthalten.

Geeignete Messverfahren zur Bestimmung des Primärpartikeldurchmessers sind zum Beispiel die Bestimmung der BET-Oberflächen O-BET, bevorzugt O-BET-$N_2$, bevorzugt gemessen gemäß Deutscher Industrie Norm DIN 66131 und DIN 66132 und der Material-Dichte p-PP:

$$d\text{-}PP = 6 / (O\text{-}BET * \rho\text{-}PP)$$

wobei beispielsweise die Material-Dichte p-PP von amorpher Kieselsäure, wie pyrogener Kieselsäure, einen Wert von 2200 g/l hat.

Andere geeignete Messverfahren zur Bestimmung des Primärpartikeldurchmessers sind zum Beispiel die Transmissions-Elektronenmikroskopie oder Hochauflösende Rasterelektronenmikroskopie, z.B. im Feldemissionsmodus, oder zum Beispiel die Ultraschallspektroskopie im Mess-Bereich 1 bis 100 MHz.

Die Partikel weisen vorzugsweise einen mittlerem Durchmesser von vorzugsweise kleiner.100 µm auf. Bevorzugt weisen die Partikel einen mittleren Durchmesser größer 1 nm, vorzugsweise von 1 nm bis 100 µm, besonders bevorzugt von 10 nm bis 10 µm, insbesondere von 50 nm bis 1000 nm, speziell ausgewählt von 50 nm bis 250 nm, auf.

Bei den Partikeln handelt es sich vorzugsweise um bei Raumtemperatur und dem Druck der umgebenden Atmosphäre, also zwischen 900 und 1100 hPa, feste Partikel.

Die Partikel sind bevorzugt unlöslich oder schwerlöslich in Wasser oder in anderen inerten Lösemitteln.

Die pyrogene Kieselsäure, weist bevorzugt eine Löslichkeit in Wasser bei pH 7,33 und einen Elektrolythintergrund von 0,11 Mol/l und einer Temperatur von 37°C von kleiner 0,1 g/l, besonders bevorzugt von kleiner als 0,05 g/l, auf, bei dem Druck der umgebenden Atmosphäre, also zwischen 900 und 1100 hPa.

Bevorzugt weist die pyrogene Kieselsäure, vorzugsweise eine Molmasse größer 10.000 g/Mol, besonders bevorzugt eine Molmasse von 50.000 bis 100.000.000 g/Mol, insbesondere von 100.000 bis 10.000.000 g/Mol, auf, jeweils gemessen bevorzugt mittels statischer Lichtstreuung.

Bevorzugt weisen die Partikel einen Kohlenstoffgehalt von kleiner als 50 Gewichtsprozent, bevorzugt kleiner als 1 Gewichtsprozent, besonders bevorzugt kleiner oder gleich 0,05 Gewichtsprozent, ganz besonders bevorzugt kleiner oder gleich 0,01 Gewichtsprozent auf. Der Gehalt an Kohlenstoff der Partikel kann dabei mit bekannten Methoden der Elementaranalytik gemessen werden. Im einer im Besonderen bevorzugten Ausführung weisen die Partikel keinen mit Elementaranalytik meßbaren Gehalt an Kohlenstoff auf.

Die Partikel haben bevorzugt eine Mohs' sche Härte gleich oder größer 1. Besonders bevorzugt weisen die Partikel eine Mohs' sche Härte größer als 4 auf.

Die Partikel bestehen aus Siliciumdioxid.

Die Kieselsäuren sind in Flammenprozessen hergestellte pyrogene Kieselsäuren mit spezifischen Oberflächen nach BET von größer als 10 $m^2/g$, hergestellt bei bevorzugten Temperaturen von über 1000 °C.

Bevorzugt wird die spezifische Oberfläche als BET Oberfläche gemessen gemäß Deutscher Industrie Norm DIN 66131 und DIN 66132.

Die Partikel haben vorzugsweise eine mittlere Primärteilchen-Partikelgröße d-PP von 0,5 bis 1000 nm, bevorzugt 5 bis 100 nm, besonders bevorzugt 5 bis 50 nm.

Die Partikel haben vorzugsweise eine mittlere Sekundärstruktur- oder Aggregates-Partikelgröße d-Aggr von 50 bis 5000 nm, bevorzugt 100 bis 500 nm, gemessen als hydrodynamischen Durchmesser.

Geeignete Messverfahren hierzu sind zum Beispiel die dynamische Lichtstreuung oder Photokorrelationsspektroskopie, zur Messung von Konzentrationen >0,01 Gew.% Feststoff, wobei diese Messung als Rückstreuung ausgeführt bzw. mittels Kreuzkorrelation gegen Mehrfachstreuung korrigiert werden kann.

Die Partikel haben vorzugsweise eine mittlere Tertiär- oder Agglomerats-Partikelgröße d-Aggl von >100 nm, gemessen als geometrischer Durchmesser.

Geeignete Messverfahren hierzu sind zum Beispiel die Laser-Lichtbeugung.

Vorzugsweise weisen die Partikel eine spezifische Oberfläche von 1 bis 1000 $m^2/g$, bevorzugt 10 bis 500 $m^2/g$, ganz besonders bevorzugt von 75 bis 350 $m^2/g$ auf. Die BET-Oberfläche wird nach bekannten Verfahren gemessen, bevorzugt gemäß Deutscher Industrie Norm DIN 66131 und DIN 66132.

Vorzugsweise weisen die Partikel eine fraktale Dimension der Oberfläche $D_s$ von vorzugsweise kleiner oder gleich 2,3 auf, bevorzugt von kleiner oder gleich 2,1, besonders bevorzugt von 1,95 bis 2,05, wobei die fraktale Dimension der Oberfläche $D_s$ hierbei definiert ist als: Partikel-Oberfläche A ist proportional zum Partikel-Radius R hoch $D_s$.

$$A = \text{Konstante-1} * R^{Ds}$$

Vorzugsweise weisen die Partikel eine fraktale Dimension der Masse $D_m$ von vorzugsweise kleiner oder gleich als 2,8, bevorzugt gleich oder kleiner 2,5, besonders bevorzugt kleiner 2,2 auf, hervorgehoben von kleiner als 2,0 auf. Die fraktale Dimension der Masse $D_m$ ist hierbei definiert als: Partikel-Masse M ist proportional zum Partikel-Radius R hoch $D_m$.

$$M = \text{Konstante-2} * R^{Dm}$$

Die Partikel sind hydrophile Kieselsäuren, die frisch hergestellt sind und z.B. direkt aus der Flamme kommen, und solche die zwischengelagert oder bereits handelsüblich verpackt sind.

Partikel sind vorzugsweise unverdichtete, mit Klopfdichten von vorzugsweise kleiner 60 g/l, aber auch verdichtete, mit Klopfdichten größer 60 g/l, Kieselsäuren, bevorzugt pyrogene Kieselsäuren. Die Klopfdichte kann nach DIN EN ISO 787-11 bestimmt werden.

Partikel können vorzugsweise Gemische aus verschiedenen Kieselsäuren sein, so z.B. Mischungen aus Kieselsäuren unterschiedlicher BET-Oberfläche.

Bei den Partikeln handelt es sich um hydrophile, nicht oberflächenmodifizierte pyrogene Kieselsäuren, die eine Dichte an Oberflächen-Silanolgruppen SiOH von vorzugsweise kleiner als 2,5 SiOH / $nm^2$, vorzugsweise kleiner oder gleich 2,0 SiOH / $nm^2$ aufweisen.

Die Partikel sind in trockener Form in der Lage, Haufwerke zu bilden mit einer Porosität $\varepsilon > 0,5$, bevorzugt $\varepsilon > 0,8$, besonders bevorzugt $\varepsilon > 0,9$, ganz besonders bevorzugt $s > 0,95$.

Die Porosität $\varepsilon$ eines Haufwerks, Formkörpers oder einer Beschichtung ist hierbei definiert als

$$\varepsilon = 1 - \text{Volumen}_{\text{Material}}/\text{Volumen}_{\text{Körper}}$$

mit

$$\text{Volumen}_{\text{Material}} = \text{Volumen der Partikel}$$

und

$\text{Volumen}_{\text{Körper}}$ = Volumen des Haufwerks, Formkörper oder der Beschichtung.

Die Porosität s kann durch Quecksilberporosimetrie oder durch Pyknometrie oder mittels inerten Gasen wie Helium oder Argon bestimmt werden durch Messen des Leervolumens $\text{Volumen}_{\text{leer}}$ des Haufwerks, des Formkörper

oder der Beschichtung, wobei gilt

$$\varepsilon = Volumen_{leer}/Volumen_{Körper}$$

In einer anderen bevorzugten Ausführung kann die Porosität ε bestimmt werden durch Messen des Volumen $Volumen_{Körper}$ des, trockene Haufwerks, Formkörpers oder der Beschichtung, sowie Messen der Masse $Masse_{Körper}$ des, trockenen Haufwerks, Formkörpers oder der Beschichtung, und einer geeigneten Bestimmung der Material-Dichte p-PP der Partikel.

$$\varepsilon = (Masse_{Körper}/Volumen_{Körper}) / \rho\text{-PP}$$

Die Porosität ε des, vorzugsweise trockenen, Haufwerks, kann bestimmt werden als Quotient zwischen der spezifischen Dichte des Körpers oder Haufwerks $Dichte_{Körper}$ und der Materialdichte p-PP der Primärpartikel.

$$\varepsilon = Dichte_{Körper} / \rho\text{-PP}$$

Die spezifischen Dichte des Körpers oder Haufwerks $Dichte_{Körper}$ kann zum Beispiel als Klopfdichte nach DIN EN ISO 787-11 bestimmt werden.

Die hydrophile pyrogene Kieselsäure besitzt eine Oberflächen-spezifische Wasseraufnahme N-spez-$H_2O$ von vorzugsweise kleiner als 5 Mikromol pro Quadratmeter [μMol/$m^2$], bevorzugt kleiner 4 μMol/$m^2$, besonders bevorzugt kleiner 3 μmol/$m^2$, ganz besonders bevorzugt kleiner 2,5 μMol/$m^2$, wobei die spezifische Wasseraufnahme N-spez-$H_2O$ definiert ist als

$$\text{N-spez-}H_2O = \text{N-}H_2O / \text{O-BET-}N_2$$

wobei
N-$H_2O$ die Monolagenkapazität der pyrogenen Kieselsäure, für Wasser ($H_2O$) ist, die bevorzugt wie oben beschrieben mit der Inversen Gaschromatografie bei endlicher Konzentration (IGC-FC) bestimmt werden kann und O-BET-$N_2$ die mittels Adsorption von Stickstoff ($N_2$) bestimmte spezifische Oberfläche nach BET ist, die nach bekannten Verfahren gemessen werden kann, bevorzugt gemäß Deutscher Industrie Norm DIN 66131 und DIN 66132.

Bevorzugt besitzt die hydrophile pyrogene Kieselsäure eine Oberflächen-spezifische Wasseraufnahme N-spez-$H_2O$ (30°C) bei einer Temperatur von 30°C von vorzugsweise kleiner als 5 Mikromol pro Quadratmeter [μMol/$m^2$], bevorzugt kleiner 4 μMol/$m^2$, besonders bevorzugt kleiner 3 μMol/$m^2$, ganz besonders bevorzugt kleiner 2,5 μMol/$m^2$, wobei die spezifische Wasseraufnahme N-spez-$H_2O$ (30°C) definiert ist als

$$\text{N-spez-}H_2O\ (30°C) = (\text{N-}H_2O)\ (30°C) / \text{O-BET-}N_2$$

wobei
N-$H_2O$ (30°C) die Monolagenkapazität der hydrophilen pyrogenen Kieselsäure für Wasser ($H_2O$) bei einer Temperatur von 30°C ist, die bevorzugt wie oben beschrieben mit der Inversen Gaschromatografie bei endlicher Konzentration (IGC-FC) bestimmt werden kann und und O-BET-$N_2$ die mittels Adsorption von Stickstoff ($N_2$) bestimmte spezifische Oberfläche nach BET ist, die nach bekannten Verfahren gemessen werden kann, bevorzugt gemäß Deutscher Industrie Norm DIN 66131 und DIN 66132.

Die Kieselsäure hat vorzugsweise einen sehr homogenen Partikelaufbau, gekennzeichnet durch eine enge Primärpartikeldurchmesserverteilung.

Bevorzugt besitzt die Kieselsäure, eine vorzugsweise homogene, das heißt eine bevorzugt enge, Primärpartikeldurchmesserverteilung, insbesondere eine homogene Oberflächen-spezifische Primärpartikeldurchmesserverteilung.

Bevorzugt ist die homogene Oberflächen-spezifische Primärpartikeldurchmesserverteilung durch eine Primärpartikeldurchmesserverteilungsbreite b-PP von vorzugsweise kleiner als 6, bevorzugt kleiner als 5, besonders bevorzugt kleiner 4, ganz besonders bevorzugt ausgewählt kleiner als 3, im Besonderen ausgewählt kleiner als 2 gekennzeichnet, wobei die Primärpartikeldurchmesserverteilungsbreite b-PP definiert ist als Quotient des maximalen Primärpartikeldurchmessers zum Beispiel bestimmt mittels Transmissionselektronenmikroskopie (TEM) d-PP-TEM-max

und der aus der spezifischen BET Oberfläche O-BET-$N_2$ errechneten mittleren Primärpartikeldurchmessers d-PP-BET

$$\text{d-PP-BET} = 6 / (\text{O-BET-N}_2 * 2.200.000\ \text{g/m}^3)$$

$$\text{b-PP} = \text{d-PP-TEM-max} / \text{d-PP-BET}$$

Bevorzugt wird die homogene Oberflächen-spezifische Primärpartikelverteilung bestimmt mittels Transmissionselektronenmikroskopie (TEM) mit einer Vergrößerung von größer als 50.000 fach, bevorzugt größer 100.000 fach, und manueller oder halb-automatischer, oder vollautomatischer digitalisierter Auswertung der analog auf Papier, Photopapier, oder analog oder digital auf einem Bildschirm ansehbarem Format oder digital auf einem Datenträger gespeicherten Format und zur Bearbeitung zur Verfügung stehenden TEM Bilder.

In einer anderen bevorzugten Ausführung kann die homogene Oberflächen-spezifische Primärpartikeldurchmesserverteilung bestimmt werden mittels Gasadsorption von Stickstoff bei der Temperatur des bei Normdruck siedenden Stickstoffs, und Auswertung der Adsorptionsisotherme nach Gun'ko, s.a. V. Gun'ko and H. Barthel, to be published in 2006.

Die Primärpartikelgröße wird durch die Flammentemperatur bestimmt. Die spezifische BET Oberfläche O-BET-$N_2$, die ein reziprokes Maß für den mittleren Primärpartikeldurchmesser d-PP-BET darstellt, wird durch die mittlere Temperatur bestimmt. Erfindungsgemäß wird die Verteilung der Primärpartikeldurchmesserverteilung durch die lokale Verteilung der Temperatur im Reaktor und die Verweilzeitverteilung der Kieselsäurepartikel bestimmt. Erfindungsgemäß wird im Reaktor eine hochhomogene lokale Verteilung der Temperatur realisiert, sowie eine homogene zeitliche Verteilung der Temperatur.

Die pyrogene Kieselsäure zeigt eine hohe Verdickungswirkung $\eta_{rel}$ auf Grund einer hochhomogenen Temperaturverteilung im Reaktor der Herstellung.
Die pyrogene Kieselsäure zeigt eine relative Viskosität oder Verdickungswirkung $\eta_{rel}$ von größer 2, bevorzugt größer 3,5, besonders bevorzugt größer 5, ganz besonders bevorzugt größer 6,5, im Besonderen bevorzugt größer 7,5, gemessen in einem flüssigen Medium mit einer Viskosität von 1 Pas bei einer Temperatur von 25°C und gemessen bei einem Schergefälle von 10 $s^{-1}$.

Bevorzugt wird die Messung der Verdickungswirkung $\eta_{rel}$ bei einem Gehalt an pyrogener Kieselsäure von größer oder gleich als 1 Gewichtsprozent, besonders bevorzugt von größer oder gleich als 1,5 Gewichtsprozent, ganz besonders bevorzugt von größer oder gleich als 2 Gewichtsprozent, im Besonderen bevorzugt von größer oder gleich als 2,5 Gewichtsprozent in einem flüssigen Medium durchgeführt.

Die pyrogene Kieselsäure ist dadurch gekennzeichnet, dass sie eine Oberflächen-spezifische Verdickungswirkung $\eta_{rel}$-OF von vorzugsweise größer 0,01, bevorzugt größer 0,02, besonders bevorzugt von größer als 0,024, ganz besonders bevorzugt von größer als 0,030, im Besonderen bevorzugt von größer als 0,035 aufweist. In einer besonders bevorzugten Ausführung weist die pyrogene Kieselsäure, eine Oberflächen-spezifische Verdickungswirkung $\eta_{rel}$-OF von vorzugsweise größer 0,04, ganz besonders bevorzugt von größer als 0,05 Gramm pro Quadratmeter (g/$m^2$) auf.

Die Oberflächen-spezifische Verdickungswirkung $\eta_{rel}$-OF ist hierbei definiert als Quotient der relativen Viskosität in einem flüssigen System oder Verdickungswirkung $\eta_{rel}$ und der spezifischen Oberfläche O-spez.

$$\eta_{rel}\text{-OF} = \eta_{rel}/\text{O-spez}$$

wobei bevorzugt die relative Viskosität oder Verdickungswirkung $\eta_{rel}$ wie unten beschrieben eine relative Viskosität in einem Polydimethylsiloxan mit Viskosität 1 Pas bei 25°C $\eta_{rel}^{PDMS-1000}$ und bei einem Gehalt an 2 Gewichtsprozent Kieselsäure, bevorzugt pyrogene Kieselsäure, aufweist.

Bevorzugt ist O-spez, wie oben beschrieben, die spezifische Oberfläche O-BET-$N_2$ nach BET, die nach bekannten Verfahren gemessen werden kann, bevorzugt gemäß Deutscher Industrie Norm DIN 66131 und DIN 66132.

Die hydrophile pyrogene Kieselsäure zeit bevorzugt eine hohe relative Viskosität oder Verdickungswirkung $\eta_{rel}$ in flüssigen Medien und zugleich eine geringe Wasseraufnahme.

Die hydrophile pyrogene Kieselsäure besitzt vorzugsweise eine Wasseraufnahme-spezifische Verdickungswirkung $\eta_{rel}$-spez-$H_2O$ von größer als 0,02, bevorzugt größer 0,05, besonders bevorzugt größer 0,75, ganz besonders bevorzugt größer 1,0, hervorragend bevorzugt von größer oder gleich 1,5 $m^2$ / $\mu$Mol.

Wobei die auf die Wasseraufnahme-spezifischeVerdickungswirkung $\eta_{rel}$-spez-$H_2O$ definiert ist als Quotient der relativen Viskosität $\eta_{rel}$ und der spezifischen Wasseraufnahme N-spez-$H_2O$ der pyrogenen Kieselsäure.

$$\eta_{rel}\text{-}H_2O = \eta_{rel} / N\text{-}spez\text{-}H_2O$$

wobei die spezifische Wasseraufnahme N-spez-$H_2O$ bevorzugt als spezifische Wasseraufnahme N-spez-$H_2O$ (30°C) bei einer Temperatur von 30°C wie oben beschrieben bestimmt wird.

Wobei bevorzugt die relative Viskosität oder Verdickungswirkung $\eta_{rel}$ wie unten beschrieben eine relative Viskosität in einem Polydimethylsiloxane mit Viskosiät 1 Pas bei 25°C $\eta_{rel}^{PDMS\text{-}1000}$ ist.

Die hydrophile pyrogene Kieselsäure besitzt bevorzugt eine auf die Wasseraufnahme bezogene Verdickungswirkung $\eta_{rel}$-$H_2O$ (30°C) von größer als 0,004, bevorzugt größer 0,006, besonders bevorzugt größer oder gleich 0,008, ganz besonders bevorzugt größer oder gleich 0,01 und hervorragend bevorzugt größer oder gleich 0,015 g / $\mu$Mol.

Wobei die auf die Wasseraufnahme bezogene Verdickungswirkung $\eta_{rel}$-$H_2O$ (30°C) definiert ist als Quotient der relativen Viskosität $\eta_{rel}$ und der Monolagenkapazität von Wasser N-$H_2O$ (30°C) bei einer Temperatur von 30°C auf der Kieselsäure.

$$\eta_{rel}\text{-}H_2O\ (30°C) = \eta_{rel} / N\text{-}H_2O\ (30°C)$$

wobei die Monolagenkapazität N-$H_2O$ (30°C) wie oben beschrieben bei einer Temperatur von 30°C bestimmt wird.

Wobei bevorzugt die Verdickungswirkung $\eta_{rel}$ oder relative Viskosität $\eta_{rel}$ wie unten beschrieben eine relative Viskosität in einem Polydimethylsiloxane mit Viskosiät 1 Pas bei 25°C $\eta_{relI}^{PDMS\text{-}1000}$ aufweist.

Als Flüssigkeiten zur Bestimmung der relativen Viskosität oder Verdickungswirkung $\eta_{rel}$ der pyrogenen Kieselsäure und der relativen Viskosität $\eta_{rel}$ mit Partikel gefüllter Flüssigkeit, können bevorzugt oligomere oder polymere Harze in organischen Lösemitteln verwendet werden, wie zum Beispiel ungesättigte Polyesterharze, wie Cokondensate aus ortho- oder meta-Phthalsäure und Malein- oder Fumarsäure, oder deren Anhydride, und einem niedermolekularen Diol, wie zum Beispiel Ethylenglykol, 1,2- oder 1,3-Propandiol, 1,2-, oder 1,3- oder 1,4- Butandiol oder neo-Pentylglykol ( $(CH_3)_2C(CH_2OH)_2$ ), oder Polyole, wie Pentaerythrit, bevorzugt gelöst zu 30 bis 80 Gew.%, bevorzugt 60 bis 70 Gew.%, in einem olefinischen Reaktivverdünner als Lösemittel, wie zum Beispiel Monostyrol.

In einer anderen bevorzugten Ausführung können Polydimethylsiloxane mit einer Viskosität von bevorzugt 100 - 10000 mPas bei 25°C eingesetzt werden, besonders bevorzugt 900 bis 1100 mPas, und in einer bevorzugten Ausführung zu größer 95 Gew.%, besonders bevorzugt größer 98 Gew.% lineare Polydimethylsiloxane, die mit Trimethylsiloxygruppen endblockiert sind.

Bevorzugt wird die Verdickungswirkung der Kieselsäure in dem flüssigen System bei einer Temperatur von 10 °C bis 60°C, besonders bevorzugt bei 24,9°C bis 25,1°C bestimmt.

Bevorzugt wird die Verdickungswirkung der Kieselsäure in dem flüssigen System in allen Schritten, wie der Vorbereitung und der Durchführung, also der Lagerung der Rohstoffe wie Kieselsäure und der Flüssigkeiten, der Abfüllung und Einwiegen der Rohstoffe wie Kieselsäure und der Flüssigkeiten und dem Dispergieren der Kieselsäure, sowie dem Vermessen der Kieselsäure-in-Flüssiges System Mischung, bei einer genau definierten und konstant gehaltenen relativen Luftfeuchte durchgeführt, bevorzugt mit einer Schwankung der relativen, Luftfeuchte kleiner als 5 % absolut, besonders bevorzugt bei 10 bis 90% relativer Luftfeuchte, ganz besonders bevorzugt bei 49% bis 51% relativer Luftfeuchte.

Die Dispergierung der Kieselsäure in dem flüssigen System erfolgt bevorzugt mit Werkzeugen die eine hohe Misch- und zugleich eine hohe Scherwirkung erzeugen, wie zum Beispiel schnelllaufende Zahnscheibendissolver, mit bevorzugt 1-10 m/s Umlaufgeschwindigkeit, bevorzugt 3-7 m/s.

Bevorzugt wird die Verdickungswirkung oder relative Viskosität $\eta_{rel}$ als Verdickungswirkung $\eta_{rel}^{PDMS\text{-}1000}$ in einem Polydimethylsiloxan mit einer Viskosität von 1000 mPas bestimmt.

Die Verdickungswirkung oder relative Viskosität $\eta_{rel}^{PDMS\text{-}1000}$ kann bevorzugt wie folgt bestimmt werden.

2 Gew.% der Kieselsäuren werden zunächst per Hand mit einem Löffel, und dann während 5 Min unter leichter Kühlung und Überlagerung mit Stickstoff von 50% relativer Feuchte bei 25°C mittels Zahnscheibendissolver, mit einer Zahnscheibe von 5 cm Durchmesser und peripherer äußerer Umlaufgeschwindigkeit von 11 m/s, entsprechend einer Drehzahl von 5600 Umdrehungen pro Minute in ein Trimethylsiloxy-endblockiertes Polydimethylsiloxan mit einer Viskosität von 1,000 Pas plus oder minus 0,05 Pas eindispergiert, und nach 5 Minuten Temperierung auf 25°C, mit einer Toleranz von plus oder minus 0,1 °C, mit einem Kegelplatte-Viskosimeter bei einen Schergefälle D von D = 10 $s^{-1}$ vermessen. Der resultierende Viskositätswert mit Kieselsäure dividiert durch die Viskosität resultierend bei gleicher Messanordnung ohne Kieselsäure ergibt $\eta_{rel}^{PDMS\text{-}1000}$.

Bevorzugt weist die pyrogene Kieselsäure an ihrer Oberfläche Bereiche auf, die eine Dichte an Oberflächen-Silanolgruppen SiOH größer als die mittlere Dichte an Oberflächen-Silanolgruppen SiOH der gesamten Oberflächen besitzen. Diese Silanolgruppen-reichen Bereiche können beispielsweise durch Adsorption von Wasser, zum Beispiel

wie oben beschrieben mit der Inversen Gaschromatografie, gemessen werden, zum Beispiel durch Messung der Monolagenkapazität von Wasser der pyrogenen Kieselsäure. Bevorzugt weist die pyrogene Kieselsäure an ihrer Oberfläche Bereiche auf, die eine Dichte an Oberflächen-Silanolgruppen SiOH kleiner als die mittlere Dichte an Oberflächen-Silanolgruppen SiOH der gesamten Oberflächen besitzen. Diese Silanolgruppen-armen Bereiche können beispielsweise durch Adsorption von Methylenchlorid, zum Beispiel analog, wie oben für Wasser beschrieben, mit der Inversen Gaschromatografie, gemessen werden, zum Beispiel durch Messung der Monolagenkapazität von Methylenchlorid der pyrogenen Kieselsäure.

Bevorzugt bilden die Oberflächen-Silanolgruppen-reicheren Bereichen und die Oberflächen-Silanolgruppenärmeren Bereiche in Summe die gesamte Kieselsäure-Oberflächen.

Bevorzugt ist eine hydrophile pyrogene Kieselsäure, die an ihrer Oberfläche Bereiche aufweist, die eine Dichte an Oberflächen-Silanolgruppen SiOH größer als die mittlere Dichte an Oberflächen-Silanolgruppen SiOH der gesamten Oberflächen besitzt und diese Oberflächen-Silanolgruppenreicheren Bereiche einen mittleren Durchmesser von größer als 1 nm pro 100 $m^2/g$ spezifischer Oberfläche, ganz besonders bevorzugt einen mittleren Durchmesser von größer als 2 nm pro 100 $m^2/g$ spezifischer Oberfläche, im Besonders bevorzugt einen mittleren Durchmesser von größer als 2,5 nm pro 100 $m^2/g$ spezifischer Oberfläche aufweisen, wobei die spezifische Oberfläche bevorzugt nach der BET Methode nach DIN 66131 und 66132 gemessen wird.

Bevorzugt weist entsprechend hydrophile pyrogene Kieselsäure mit einer spezifischen Oberfläche von 100 $m^2/g$ Oberflächen-Silanolgruppen-reichere Bereiche mit einem mittleren Durchmesser von größer als 1 nm ganz besonders bevorzugt mit einem mittleren Durchmesser von größer als 2 nm, im Besonders bevorzugt mit einem mittleren Durchmesser von größer als 2,5 nm auf.

Bevorzugt weist entsprechend hydrophile pyrogene Kieselsäure mit einer spezifischen Oberfläche von 200 $m^2/g$ Oberflächen-Silanolgruppen-reichere Bereiche mit einem mittleren Durchmesser von größer als 2 nm ganz besonders bevorzugt mit einem mittleren Durchmesser von größer als 4 nm, im Besonderen bevorzugt mit einem mittleren Durchmesser von größer als 5 nm auf.

Bevorzugt weist entsprechenderweise eine pyrogene Kieselsäure mit einer spezifischen Oberfläche von 300 $m^2/g$ Oberflächen-Silanolgruppen-reichere Bereiche mit einem mittleren Durchmesser von größer als 3 nm ganz besonders bevorzugt mit einem mittleren Durchmesser von größer als 6 nm, im Besonderen bevorzugt mit einem mittleren Durchmesser von größer als 7,5 nm auf.

Die Bestimmung der Größe der Oberflächen-Silanolgruppenreicheren Bereiche erfolgt wie folgt aus den spezifischen Oberflächen der Kieselsäure gemessen mit Wasser $S_{BET}(H_2O)$ und gemessen mit Methylenchlorid $S_{BET}(CH_2Cl_2)$ , die sich für jede n-te Monolage zur Gesamtoberfläche $S_{total}$ aufsummieren.

$$S_{BET}(H_2O) + S_{BET}(CH_2Cl_2) = S_{Total}$$

$$S^{H_2O}(n) + S_{BET}^{CH_2Cl_2}(n) = S_{Total}$$

Mit

$$S^{H_2O}(1) = S_{BET}(H_2O) \quad and \quad S_{BET}^{CH_2Cl_2}(1) = S_{BET}(CH_2Cl_2)$$

Ergibt sich für jede n-te Monolage n > 0:

$$S^{H_2O}(n) = \pi . N(r + n.dr)^2$$

Wobei N die Anzahl der Silanolgruppen-reichen Bereiche ist, r der mittelre Radius der Silanolgruppen-reichen Bereiche ist und dr die Größe eines Wassermoleküls ist

Mit:

$$N = \frac{S_{BET}(H_2O)}{\pi(r + dr)^2} \quad \text{und} \quad S^{CH_2Cl_2}(n) = S_{Total} - S^{H_2O}(n)$$

ergibt sich

$$\sqrt{\frac{S_{Total} - S^{CH_2Cl_2}(n)}{S_{BET}(H_2O)}} = 1 + (n-1)\frac{dr}{r+dr}$$

Durch lineare Auftragung von

$$\sqrt{\frac{S_{Total} - S^{CH_2Cl_2}(n)}{S_{BET}(H_2O)}}$$

als Funktion von der Anzahl der Monolagen n ergibt sich eine Gerade. Die Steigung slope dieser Geraden und der Radius der Silanolgruppen-reichen Bereiche stehen in folgendem Zusammenhang

$$r = \frac{dr}{slope} - dr$$

Die hydrophile pyrogene Kieselsäure weist bevorzugt, eine Wasseraufnahme von kleiner oder gleich 1,0. Gewichtsprozent, bevorzugt kleiner oder gleich 0,8 Gewichtsprozent, besonders bevorzugt kleiner oder gleich 0,6 Gewichtsprozent, ganz besonders bevorzugt kleiner oder gleich 0,4 Gewichtsprozent, nach einer Lagerung von mehr als einem Tag, bevorzugt nach 2 Tagen, besonders bevorzugt nach 3 Tagen, bei einer Temperatur von größer oder gleich 20°C, bevorzugt bei 23 °C und einer relativen Luftfeuchte von größer oder gleich 90%, bevorzugt größer oder gleich 94%, besonders bevorzugt größer oder gleich 98% pro 100 $m^2/g$ spezifischer Oberfläche auf. Wobei die spezifische Oberfläche beispielsweise eine spezifische BET-Oberfläche ist, die nach bekannten Verfahren gemessen werden kann, bevorzugt gemäß Deutscher Industrie Norm DIN 66131 und DIN 66132.

Die Kieselsäure wird bevorzugt eingesetzt als Verdickungsmittel für 1-Komponenten und 2-Komponenten bei Raumtemperatur unter Feuchtezutritt vernetzbare Silicondichtstoffe und -kautschuke, sowie 1-Komponenten und 2-Komponenten bei Raumtemperatur unter Feuchtezutritt vernetzbare Polyurethan-Beschichtungsstoffe, -Klebstoffe und -Dichtstoffe.

Die Kieselsäure wird bevorzugt eingesetzt als Verstärkerfüllstoff für 1-Komponenten und 2-Komponenten bei Raumtemperatur unter Feuchtezutritt vernetzbare Silicondichtstoffe und -kautschuke, sowie 1-Komponenten und 2-Komponenten bei Raumtemperatur unter Feuchtezutritt vernetzbare Polyurethan-Beschichtungsstoffe, -Klebstoffe und -Dichtstoffe.

Die pyrogene Kieselsäuren wird bevorzugt eingesetzt als Verdickungsmittel und Verstärkerfüllstoff in, bevorzugt feuchtigkeitsempfindlichen, Beschichtungssystemen, wie Lacken, Farben, Tinten, Lasuren oder Druckfarben, für Automobile, Transportmedien, Konstruktionen, Inneneinrichtungen, Fassaden, für Möbel, Wandfarben, Holzfarben, im Bautenschutz, sowie als Verdickungsmittel und Verstärkerfüllstoff in, bevorzugt feuchtigkeitsempfindlichen, Klebstoffsystemen, wie in der Automobilindustrie, der Bauindustrie, der industriellen Fertigung, sowie als Verdickungsmittel und Verstärkerfüllstoff in, bevorzugt feuchtigkeitsempfindlichen, Dichtstoffsystemen, wie für Gebäudefenster und Automobilverglasung, Sanitäranwendungen, im Automobil- und Baubereich, sowie als Verdickungsmittel und Verstärkerfüllstoff in, bevorzugt feuchtigkeitsempfindlichen, Elastomer und Kautschuksystemen, sowie als Rieselhilfe in, bevorzugt feuchtigkeitsempfindlichen, Pulvern und pulvrigen Systemen, wie Feuerlöschpulver, Pulverlacke und Toner, sowie, beispielsweise als Rohstoff, zur Herstellung von, bevorzugt feuchtigkeitsempfindlichen, Wärme- und Hitze-isolierenden Materialien, Formkörpern, und Bauteilen, sowie als Rieselhilfe für Pulver und pulvrige Systeme, als Rohstoff für Wärme- und Hitzeisolierungen, sowie als Poliermittel in Anwendungen chemischen und mechanischen Polierens und Planarisierens, zum Beispiel in der Elektronikindustrie, der Halbleiterindustrie oder in der Herstellung optischer Bauteile.

Die Herstellung der pyrogenen Kieselsäure erfolgt bei hoher Temperatur durch die Umsetzung einer verdampfbaren Siliciumhaltigen Verbindung, bevorzugt eines Silans, in einer Wasserstoff-Sauerstoff-Flamme bei Temperaturen von größer als 1000 °C und bis maximal 2000°C

Als Silan wird bevorzugt eingesetzt

Silan der Formel $H_xSiR_yCl_z$

Wobei bevorzugt x + y + z = 4 ist und bevorzugt R eine Methyl- oder Ethyl- oder Propylgruppe, bevorzugt eine Methylgruppe, ist.

Beispiele für Silane sind Tetrachlorsilan, Methyltrichlorsilan, Hydrogentrichlorsilan, Hydrogenmethyldichlorsilan, Tetramethoxysilan, Tetraethoxysilan, Hexamethyldisiloxan, oder deren beliebigen Gemische.

Bevorzugt sind Beispiele für Silane sind Tetrachlorsilan und Hydrogentrichlorsilan und deren Gemische.

Silangemische mit einem Gehalt von größer 80 Vol% Tetrachlorsilan sind bevorzugt, besonders bevorzugt größer 90 Vol% Tetrachlorsilan, ganz besonders bevorzugt größer 95 Vol%, hervorragend bevorzugt größer 99 Vol% Tetrachlorsilan enthalten.

In einer anderen bevorzugten Ausführung sind Gemische aus Silanen bevorzugt, die in Summe größer 80 Vol%, bevorzugt größer 90 Vol%, ganz besonders bevorzugt größer 95 Vol% Tetrachlorsilan und Hydrogentrichlorsilan enthalten.

In einer anderen bevorzugten Ausführung sind Gemische aus Silanen bevorzugt, die in Summe größer oder gleich 10 Vol%, bevorzugt größer oder gleich 25 Vol%, ganz besonders bevorzugt größer oder gleich 50 Vol% Hydrogentrichlorsilan und bevorzugt größer oder gleich 45 Vol% Tetrachlorsilan enthalten.

Die Zugabe der Silane zum Reaktor kann erfolgen, indem vorzugsweise die Silane flüssig vorgemischt werden und dann verdampft werden, um dann zugegeben zu werden, oder die Silane können jedes für sich verdampft werden und dann dampfförmig gemischt werden, um dann zugegeben zu werden. Eine Zugabe ist auch möglich, indem jedes Silan getrennt dampfförmig zugegeben wird, wobei die Silane jedoch gleichzeitig zugegeben werden. Bevorzugt werden die Silane flüssig vorgemischt und dann verdampft, um dann zugegeben zu werden, besonders bevorzugt können die Silane jedes für sich verdampft werden und dann dampfförmig gemischt werden, um dann zugegeben zu werden

Bevorzugt wird die erfindungsgemäße pyrogene Kieselsäure unter Bedingungen hergestellt, die eine hochgleichmäßige radiale Temperaturverteilung in der Flamme erzielen. Ein hochgleichmäßige radiale Temperaturverteilung in der Flamme kann durch bautechnische geometrischen Maßnahmen oder geeignete chemische Rezepturführung erfolgen.

Zur Herstellung pyrogener Kieselsäure werden auf 100 kg/h Silane größer als 800 $Nm^3/h$ Luft, bevorzugt größer oder gleich 1000 $Nm^3/h$ Luft, besonders bevorzugt größer oder gleich 1200 $Nm^3/h$ Luft zugesetzt. Das Verhältnis des eingesetzten Volumens an Wasserstoffgas bezogen auf das eingesetzte Volumen an Luft ist kleiner oder gleich 0,26, besonders bevorzugt kleiner oder gleich 0,24, ganz besonders bevorzugt kleiner oder gleich 0,21, im Besonderen bevorzugt kleiner oder gleich 0,19.

Nach Umsetzung wird die Kieselsäure von Prozessgas getrennt, dies erfolgt bevorzugt über Filter, und anschließend von restlichem Chlorwasserstoffgas in einem heißen Gasstrom gereinigt, als Gase sind bevorzugt Luft oder Stickstoff bei Temperaturen von vorzugsweise größer 250 °C - 600 °C, bevorzugt 350 °C - 550°C und besonders bevorzugt 350 °C - 450 °C.

Die Herstellung der pyrogenen Kieselsäure erfolgt unter wasserfreien Bedingungen. Unter wasserfrei ist hierbei zu verstehen, dass weder im hydrothermalen Herstellungs-Prozess, noch in den weiteren Schritten des Prozesses, wie Abkühlung, Reinigung und Lagerung, bis zum fertigen und gereinigtem, verpackten und versandfertigen Produkt zusätzliches Wasser in den Prozess zugeführt wird, weder in flüssiger noch in dampfförmiger Form. Kein zusätzliches Wasser heißt hierbei, dass kein, zusätzliches, Wasser, als das durch die Reaktion von Wasserstoff, und gegebenenfalls anderen Wasserstoff-haltigen Brenngasen, und Sauerstoff, im Reaktor, in der Flamme und im Produktionssystem entstehenden und vorhandenen Wasser zugesetzt wird.

Die Zugabe aller Brenngase, bevorzugt Wasserstoff, gegebenenfalls andere Brenngase wie bei Normaldruck gasförmige Alkane, wie beispielsweise Methan, Ethan, oder Propan, bevorzugt Methan, sowie Luft oder Sauerstoff, bevorzugt Luft, die zum Beispiel durch Ausfrieren vortrocknet sein kann, und Silane oder Silangemische, kann getrennt oder nach vorheriger Mischung, aller Gasströme oder von Teilgasströmen, erfolgen. Eine vorherige Mischung der Gase und Silane ist bevorzugt.

Bevorzugt erfolgt anschließend eine Kühlung des Prozessgemisches und anschließender Abtrennung der festen Produkte und der Gase durch bevorzugt Filtration.

Es erfolgt eine Reinigung der festen Produkte von adsorbiertem Chlorwasserstoffgas HCl durch Behandlung bei erhöhter Temperatur und bevorzugt Zugabe von Reingas zur Abtrennung der HCl.

Bevorzugt erfolgt eine Homogenisierung des erhaltenen Produkts durch Einblasen von, bevorzugt getrockneter, Luft oder durch mechanisches Vermischen wie Rühren oder Umpumpen.

Das Verdampfen der flüssigen Einsatzstoffe kann bevorzugt durch Wärmeübertragung mittels eines·Wärmetauschers erfolgen oder durch Siedepunktserniedrigung durch Anlegen von Vakuum.

Die Mischung der Gase und Dämpfe kann entweder innerhalb des Reaktors oder außerhalb des Reaktors erfolgen, bevorzugt außerhalb.

Die Kühlung der Gase und der pyrogenen Kieselsäure können durch Einblasen von zusätzlichen Gasen, wie zum Beispiel Stickstoff oder durch Wärmetauscher erfolgen, bevorzugt sind Wärmetauscher.

Die Abtrennung der pyrogenen Kieselsäure von den gasförmigen Reaktionsbestandteilen kann entweder durch Abscheidung, bevorzugt Zyklonabscheidung, oder durch Filtration an einem porösen Filtermaterial, bevorzugt Filtergewebe, erfolgen.

Die Reinigung der festen Bestandteile erfolgt durch heiße Gase, bevorzugt heiße Luft oder Stickstoff, bevorzugt in einem Wirbelbett.

Die pyrogene Kieselsäure kann nachträglich oberflächenmodifiziert werden, zum Beispiel durch Silylierung mit Organosiliciumverbindungen.

Zusätzlich können, mit oder ohne Silylierung, Verfahren zur mechanischen Verdichtung der pyrogenen Kieselsäure eingesetzt werden, wie zum Beispiel Presswalzen, Kugelmühlen, Kollergänge, Schraubenverdichter und Brikettierer.

Zusätzlich können, mit oder ohne Silylierung, Verfahren zur Desagglomerierung der pyrogenen Kieselsäure eingesetzt werden, wie Stiftmühlen oder Vorrichtungen zur Mahlsichtung und/oder Verfahren zur mechanischen Verdichtung der Kieselsäure, wie zum Beispiel Presswalzen, oder Verdichten durch Absaugen des Luft- oder Gasinhaltes durch geeignete Vakuummethoden oder andere Verfahren zur mechanischen Verdichtung wie zum Beispiel Presswalzen, Kugelmühlen, Kollergänge, Schraubenverdichter und Brikettierer.

## Beispiele

Beispiel 1

100 kg/h Siliciumtetrachlorid werden homogen gemischt in einer Flamme aus 1429 $Nm^3/h$ Luft und 357 $Nm^3/h$ Wasserstoffgas in einer Reaktorkammer umgesetzt. Die Gasmischung reagiert bei ca. 1600°C. Nach Austritt aus der Brennkammer wird das entstandene Kieselsäure-Gasgemisch in einem Wärmetauschersystem auf ca. 200°C abgekühlt, und anschließend wird der Feststoff Kieselsäure von der Chlorwasserstoff-haltigen Gasphase in einem Filtersystem getrennt. Anschließend werden bei erhöhter Temperatur durch Zuführung von über die Verbrennung von Erdgas erhitzter Luft ohne weitere Zugabe von Wasser oder Feuchte Reste von Chlorwasserstoff entfernt. Es wird eine pyrogene Kieselsäure mit einer spezifischen Oberfläche, gemessen nach der BET Methode nach DIN 66131 und 66132 von 50 $m^2/g$ erhalten, mit einem pH-Wert der 4%igen (Gew%) Dispersion (DIN/ISO 787/9) von 4,3. Weitere physikalisch chemische Daten sind in Tabellen 1a, 1b und 1c aufgeführt.

Beispiel 2

100 kg/h Siliciumtetrachlorid werden homogen gemischt in einer Flamme aus 822 $Nm^3/h$ Luft und 178 $Nm^3/h$ Wasserstoffgas in einer Reaktorkammer umgesetzt. Die Gasmischung reagiert bei ca. 1600°C. Nach Austritt aus der Brennkammer wird das entstandene Kieselsäure-Gasgemisch in einem Wärmetauschersystem auf ca. 200°C abgekühlt, und anschließend wird der Feststoff Kieselsäure von der Chlorwasserstoff-haltigen Gasphase in einem Filtersystem getrennt. Anschließend werden bei erhöhter Temperatur durch Zuführung von über die Verbrennung von Erdgas erhitzter Luft ohne weitere Zugabe von Wasser oder Feuchte Reste von Chlorwasserstoff entfernt. Es wird eine pyrogene Kieselsäure mit einer spezifischen Oberfläche, gemessen nach der BET Methode nach DIN 66131 und 66132 von 125 $m^2/g$ erhalten, mit einem pH-Wert der 4%igen (Gew%) Dispersion (DIN/ISO 787/9) von 4,2. Weitere physikalisch chemische Daten sind in Tabellen 1a, 1b und 1c aufgeführt.

Die Kieselsäure wird anschließend bei einer Temperatur von 25°C und bei einer relativen Luftfeuchte von 94 Prozent in einem geschlossenen Raum gelagert. Die Kieselsäure nimmt dabei nach insgesamt 0,5 Tagen 3,8 Prozent Wasser, nach insgesamt 1 Tag 4,2 Prozent Wasser, nach insgesamt 2 Tagen 5,1 Prozent Wasser auf und nach insgesamt 5 Tagen 6,2 Prozent Wasser auf. Die Wasseraufnahme wird durch Gewichtszunahme ermittelt.

Beispiel 3

100 kg/h Siliciumtetrachlorid werden homogen gemischt in einer Flamme aus 1162 $Nm^3/h$ Luft und 243 $Nm^3/h$ Wasserstoffgas in einer Reaktorkammer umgesetzt. Die Gasmischung reagiert bei ca. 1600°C. Nach Austritt aus der Brennkammer wird das entstandene Kieselsäure-Gasgemisch in einem Wärmetauschersystem auf ca. 200°C abgekühlt, und anschließend wird der Feststoff Kieselsäure von der Chlorwasserstoff-haltigen Gasphase in einem Filtersystem getrennt. Anschließend werden bei erhöhter Temperatur durch Zuführung von über die Verbrennung von Erdgas erhitzter Luft ohne weitere Zugabe von Wasser oder Feuchte Reste von Chlorwasserstoff entfernt. Es wird eine pyrogene Kieselsäure mit einer spezifischen Oberfläche, gemessen nach der BET Methode nach DIN 66131 und 66132 von 300 $m^2/g$ erhalten, mit einem pH-Wert der 4%igen (Gew%) Dispersion (DIN/ISO 787/9) von 4,1. Weitere physikalisch chemische Daten sind in Tabellen 1a, 1b und 1c aufgeführt.

Beispiel 4

100 kg/h Siliciumtetrachlorid werden homogen gemischt in einer Flamme aus 1321 $Nm^3/h$ Luft und 237 $Nm^3/h$ Wasserstoffgas in einer Reaktorkammer umgesetzt. Die Gasmischung reagiert bei ca. 1600°C. Nach Austritt aus der Brennkammer wird das entstandene Kieselsäure-Gasgemisch in einem Wärmetauschersystem auf ca. 200°C abgekühlt, und anschließend wird der Feststoff Kieselsäure von der Chlorwasserstoff-haltigen Gasphase in einem Filtersystem getrennt. Anschließend werden bei erhöhter Temperatur durch Zuführung von über die Verbrennung von Erdgas erhitzter Luft ohne weitere Zugabe von Wasser oder Feuchte Reste von Chlorwasserstoff entfernt. Es wird eine pyrogene Kieselsäure mit einer spezifischen Oberfläche, gemessen nach der BET Methode nach DIN 66131 und 66132 von 100 $m^2/g$ erhalten, mit einem pH-Wert der 4%igen (Gew%) Dispersion (DIN/ISO 787/9) von 4,2. Weitere physikalisch chemische Daten sind in Tabellen 1a, 1b und 1c aufgeführt.

Die Kieselsäure wird anschließend bei einer Temperatur von 25°C und bei einer relativen Luftfeuchte von 94 Prozent in einem geschlossenen Raum gelagert. Die Kieselsäure nimmt dabei nach insgesamt 0,5 Tagen 2,2 Prozent Wasser, nach insgesamt 1 Tag 2,4 Prozent Wasser, nach insgesamt 2 Tagen 2,7 Prozent Wasser auf und nach insgesamt 5 Tagen 3,1 Prozent Wasser auf. Die Wasseraufnahme wird durch Gewichtszunahme ermittelt.

Beispiel 5

50 kg/h Tetrachlorsilan und 50 kg/h Hydrogentrichlorsilan werden homogen gemischt in einer Flamme aus 822 $Nm^3/h$ Luft und 178 $Nm^3/h$ Wasserstoffgas in einer Reaktorkammer umgesetzt. Die Gasmischung reagiert bei ca. 1600°C. Nach Austritt aus der Brennkammer wird das entstandene Kieselsäure-Gasgemisch in einem Wärmetauschersystem auf ca. 200°C abgekühlt, und anschließend wird der Feststoff Kieselsäure von der Chlorwasserstoff-haltigen Gasphase in einem Filtersystem getrennt. Anschließend werden bei erhöhter Temperatur durch Zuführung von über die Verbrennung von Erdgas erhitzter Luft ohne weitere Zugabe von Wasser oder Feuchte Reste von Chlorwasserstoff entfernt. Es wird eine pyrogene Kieselsäure mit einer spezifischen Oberfläche, gemessen nach der BET Methode nach DIN 66131 und 66132 von 125 $m^2/g$ erhalten, mit einem pH-Wert der 4%igen (Gew%) Dispersion (DIN/ISO 787/9) von 4,2. Weitere physikalisch chemische Daten sind in Tabellen 1a, 1b und 1c aufgeführt.

Die Kieselsäure wird anschließend bei einer Temperatur von 25°C und bei einer relativen Luftfeuchte von 94 Prozent in einem geschlossenen Raum gelagert. Die Kieselsäure nimmt dabei nach insgesamt 0,5 Tagen 3,1 Prozent Wasser, nach insgesamt 1 Tag 3,4 Prozent Wasser, nach insgesamt 2 Tagen 4,1 Prozent Wasser auf und nach insgesamt 5 Tagen 5,0 Prozent Wasser auf. Die Wasseraufnahme wird durch Gewichtszunahme ermittelt.

Tabelle 1a: Auswertung der Beispiele 1 bis 4

| Beispiel | $\eta_{rel}^{PDMS\ 1000}$ | $\varepsilon$ | N-$H_2O$ (40°C) | $\eta_{rel}$-OF | $\eta_{rel}$-$H_2O$ (40°C) | b-PP | SiOH /$nm^2$ |
|---|---|---|---|---|---|---|---|
| | | | $\mu$mol /g | $g/m^2$ | g/$\mu$mol | | |
| Beispiel 1 | 2,3 | 0,96 | 227 | 0,046 | 0,0101 | 3,5 | 1,7 |
| Beispiel 2 | 3,7 | 0,97 | 588 | 0,030 | 0,0063 | 4,5 | 1,7 |
| Beispiel 3 | 7,3 | 0,97 | 1650 | 0,024 | 0,0044 | 5 | 1,8 |
| Beispiel 4 | 3,6 | 0,97 | 450 | 0,036 | 0,0080 | 3,5 | 1,6 |
| Beispiel 5 | 3,9 | 0,97 | - | 0,031 | - | 3,2 | 1,7 |

Tabelle 1b: Auswertung der Beispiele 1 bis 4

| Beispiel | O-BET-$N_2$ | N-spez-$H_2O$ 40°C) | N-$H_2O$ (30°C) | N-spez-$H_2O$ 30°C) | $\eta_{rel}$-$H_2O$ (30°C) | R(SiO H) |
|---|---|---|---|---|---|---|
| | $m^2/g$ | $\mu mol/m^2$ | $\mu$mol /g | $\mu mol/m^2$ | g/$\mu$mol | nm |
| Beispiel 1 | 50 | 4,5 | 157 | 3,1 | 0,0146 | 1,4 |
| Beispiel 2 | 125 | 4,7 | 528 | 4,2 | 0,0070 | 1,9 |
| Beispiel 3 | 300 | 5,5 | 1626 | 5,4 | 0,0045 | 4,2 |
| Beispiel 4 | 100 | 4,5 | 238 | 2,4 | 0,0151 | 3,8 |
| Beispiel 5 | 125 | - | 403 | 3,2 | 0,0097 | 2,8 |

Tabelle 1c: Auswertung der Beispiele 1 bis 4

| Beispiel | $\eta_{rel}$-spez-$H_2O$ (30°C) | Q-equil-$H_2O$ | Q-equil-$H_2O$ pro 100 $m^2/g$ |
|---|---|---|---|
| | $m^2/\mu mol$ | Gew% | Gew% |
| Beispiel 1 | 0,73 | 3,2 | 0,065 |
| Beispiel 2 | 0,88 | 8,0 | 0,064 |
| Beispiel 3 | 1,35 | 20,4 | 0,068 |
| Beispiel 4 | 1,51 | 3,9 | 0,039 |
| Beispiel 5 | 1,21 | 7,1 | 0,057 |

$\eta_{rel}^{PDMS\text{-}1000}$: Relative Viskosität oder Verdickungswirkung von 2 Gewichtsprozent Kieselsäure gemessen bei einem Schergefälle von 10 1/s und bei einer Temperatur von 25°C in einem Polydimethylsiloxan mit einer Viskosität von 1000 mPas bei 25°C

$\varepsilon$: Porosität

N-$H_20$ (40°C): Massen-spezifische Wasseraufnahme, bestimmt als Monolagenkapazität für Wasser bei einer Temperatur von 40°C.

$\eta$-OF : Oberflächenspezifische Verdickungswirkung, bestimmt als relative Verdickungswirkung $\eta_{rel}^{PDMS\text{-}1000}$ dividiert durch die spezifische Oberfläche gemessen nach der BET Methode nach DIN 66131 und 66132

$\eta_{rel}$-$H_2O$ (40°C):Wasseraufnahmespezifische Verdickungswirkung, bestimmt als relative Verdickungswirkung $\eta_{rel}^{PDMS\text{-}1000}$ dividiert durch die Monolagenkapazität für Wasser bei 40°C

b-PP: Oberflächenspezifische Primärpartikeldurchmesserverteilung

SiOH/$nm^2$: Dichte an Oberflächen-Silanolgruppen SiOH, bezogen auf die spezifische Oberfläche, gemessen nach der BET Methode nach DIN 66131 und 66132

O-BET-$N_2$: Spezifische Oberfläche nach BET gemäß Deutscher Industrie Norm DIN 66131 und DIN 66132.

N-spez-$H_20$ (40°C): Oberflächen-spezifische Wasseraufnahme, bestimmt als Quotient aus der Monolagenkapzität für Wasser N-$H_20$ bei einer Temperatur von 40°C dividiert durch die spezifische Oberfläche nach BET.N-$H_20$ (30°C): Massen-spezifische Wasseraufnahme, bestimmt als Monolagenkapazität für Wasser bei einer Temperatur von 30°C.

N-spez-$H_20$ (30°C): Oberflächen-spezifische Wasseraufnahme, bestimmt als Quotient aus der Monolagenkapzität für Wasser N-$H_20$ bei einer Temperatur von 30°C dividiert durch die spezifische Oberfläche nach BET.

$\eta_{rel}$-spez-$H_2O$ (30°C): Wasseraufnahme-spezifische Verdickungswirkung, bestimmt als relative Verdickungswirkung $\eta_{rel}^{PDMS\text{-}1000}$ dividiert durch die Oberflächen-spezifische Wasseraufnahme bei 30°C

$\eta_{rel}$-$H_2O$ (30°C) : Auf die Wasseraufnahme bezogene Verdickungswirkung, bestimmt als relative Verdickungswirkung $\eta_{rel}^{PDMS\text{-}1000}$ dividiert durch die Monolagenkapazität für Wasser bei 30°C

R(SiOH): Durchmesser der Silanolgruppen-reichen Domänen bestimmt mittels Inverser Gaschromatografie bei einer Temperatur von 30°C und Desorption von Methylenchlorid bei (1) Abwesenheit von Wasser, (2) Wasserdampfdruck entsprechend einer Monolage Wasser, (3) Wasserdampfdruck entsprechend zwei Monolagen Wasser und (4) Wasserdampfdruck entsprechend drei Monolagen Wasser

Q-equil-$H_2O$: Wasseraufnahme in Gewichtsprozent nach drei Tagen Lagerung bei einer Temperatur von 23°C und einer relativen Luftfeuchte von 98%

## Patentansprüche

**1.** Verfahren zur Herstellung von hydrophiler, pyrogener Kieselsäure mit einer relativen Viskosität oder Verdickungswirkung $\eta_{rel}$ grösser 2, gemessen in einem flüssigen Medium mit einer Viskosität von 1 Pas bei einer Temperatur von 25 °C und gemessen bei einem Schergefälle von 10 $s^{-1}$ und die in trockener Form in der Lage ist Haufwerke zu bilden, mit einer Porosität von größer 0,5, durch die Umsetzung von einem verdampfbaren Tetrachlorsilan und Hydrogentrichlorsilangemisch, in einer Wasserstoff-Sauerstoff-Flamme bei Temperaturen von größer als 1000 °C und bis maximal 2000°C, mit der Maßgabe, dass die Herstellung der pyrogenen Kieselsäure unter wasserfreien Bedingungen erfolgt, wobei nach der Umsetzung die Kieselsäure von Prozessgas getrennt wird, und anschließend

von restlichem Chlorwasserstoffgas gereinigt wird, indem in einem heißen Gasstrom bei Temperaturen von vorzugsweise größer 250 °C - 600 °C gereinigt wird und wobei das Verhältnis des eingesetzten Volumens an Wasserstoffgas bezogen auf das eingesetzte Volumen an Luft kleiner oder gleich 0,26 ist und wobei 100 kg/h Silane mehr als 800 $Nm^3$/h Luft zugesetzt werden.

2. Verfahren zur Herstellung von pyrogener Kieselsäure nach Anspruch 1, **dadurch gekennzeichnet, dass** Gemische verwendet werden, die in Summe größer 80 Vol% Tetrachlorsilan und Hydrogentrichlorsilan enthalten.

3. Verfahren zur Herstellung von pyrogener Kieselsäure nach Anspruch 1 oder 2, **dadurch gekennzeichnet, dass** Gemische aus Silanen, die in Summe größer oder gleich 10 Vol% Hydrogentrichlorsilan und größer oder gleich 45 Vol% Tetrachlorsilan enthalten, augewendet werden.

## Claims

1. Process for preparing hydrophilic fumed silica which has a relative viscosity or thickening action $\eta_{rel}$ greater than 2, measured in a liquid medium having a viscosity of 1 Pas at a temperature of 25°C and measured at a shear gradient of 10 $s^{-1}$, and which, in dry form, is capable of forming accumulations having a porosity of greater than 0.5, by the reaction of a vaporizable tetrachlorosilane and hydrotrichlorosilane mixture in a hydrogen-oxygen flame at temperatures of greater than 1000°C and up to a maximum of 2000°C, with the proviso that the fumed silica is prepared under anhydrous conditions, with separation of the silica from process gas after the reaction, followed by purification to remove residual hydrogen chloride gas, by purifying in a hot gas stream at temperatures of preferably greater than 250°C - 600°C, and wherein the ratio of the volume of hydrogen gas used based on the volume of air used is less than or equal to 0.26, and wherein more than 800 $m^3$ (STP)/h of air are added to 100 kg/h of silanes.

2. Process for preparing fumed silica according to Claim 1, **characterized in that** mixtures containing a total of greater than 80% by volume of tetrachlorosilane and hydrotrichlorosilane are used.

3. Process for preparing fumed silica according to Claim 1 or 2, **characterized in that** mixtures of silanes containing a total of greater than or equal to 10% by volume of hydrotrichlorosilane and greater than or equal to 45% by volume of tetrachlorosilane are used.

## Revendications

1. Procédé pour la production de silice pyrogénée hydrophile, ayant une viscosité relative ou une action épaississante $\eta_{rel}$ supérieure à 2, mesurée dans un milieu liquide ayant une viscosité de 1 Pa.s à une température de 25 °C et mesurée à un gradient de cisaillement de 10 $s^{-1}$ et qui est capable sous forme sèche de former des amas ayant une porosité de plus de 0,5, par la mise en réaction d'un mélange vaporisable de tétrachlorosilane et d'hydrogéno-trichlorosilane, dans une flamme d'oxygène-hydrogène à des températures de plus de 1 000 °C et de jusqu'à 2 000 °C au maximum, étant entendu que la production de la silice pyrogénée s'effectue dans des conditions anhydres, après la mise en réaction la silice étant séparée du gaz de processus, et étant ensuite libérée du gaz chlorhydrique résiduel, en étant purifiée dans un courant de gaz chaud à des températures de préférence de plus de 250 °C - 600 °C et le rapport du volume utilisé de gaz hydrogène au volume utilisé d'air étant inférieur ou égal à 0,26 et plus de 800 $Nm^3$/h d'air étant ajoutés à 100 kg/h de silane.

2. Procédé pour la production de silice pyrogénée selon la revendication 1, **caractérisé en ce qu'**on utilise des mélanges qui contiennent au total plus de 80 % en volume de tétrachlorosilane et d'hydrogéno-trichlorosilane.

3. Procédé pour la production de silice pyrogénée selon la revendication 1 ou 2, **caractérisé en ce qu'**on utilise des mélanges de silanes qui contiennent au total ≥ 10 % en volume d'hydrogénotrichlorosilane et ≥ 45 % en volume de tétrachlorosilane.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0097378 A
- EP 1302444 A


### In der Beschreibung aufgeführte Nicht-Patentliteratur


- Fumed Silica - Production, Properties and Applications. Organosilicon Chemistry II, From Molecules to Materials. Wiley, VCH, 1996
- **J. MATHIAS, G. WANNEMACHER.** Basic Characteristics and Applications of Aerosil: 30, The Chemistry and Physics of the Aerosil Surface. *J. Colloid and Interface Sci.,* 1988, vol. 125 (1), 61-68
- **J.R. CONDER ; C.L. YOUNG.** Physico-Chemical Measurement by Gas Chromatography. Wiley, 1979
- **S.J. GREGG ; K.S.W. SING.** Adsorption, Surface Area and Porosity. Academic Press, 1982
- **H. BARTHEL.** *Gun'ko, s.a. V. Gun'ko,* 2006